# FASCICULE DE BREVET EUROPEEN

(11) **EP 1 269 440 B1**
(45) Date de publication et mention de la délivrance du brevet: **29.10.2003**
(21) Numéro de dépôt: 01915457.4
(22) Date de dépôt: 09.03.2001
(51) Int. Cl.: G08B 13/14, G08B 13/08, G06F 13/12, G06F 1/00, G07F 7/10

(54) **MEMBRANE ELASTOMERE ANTI-INTRUSION POUR BOITIERS ELECTRONIQUES SECURISES**
ELASTOMERMEMBRAN GEGEN EINDRINGEN FÜR GESICHERTE ELEKTRONISCHE GEHÄUSE
ANTI-SPOOFING ELASTOMER MEMBRANE FOR SECURE ELECTRONIC MODULES

(30) Priorité: 17.03.2000 FR 0003465
(43) Date de publication de la demande: 02.01.2003
(73) Titulaire: THALES e-TRANSACTIONS S.A., 78370 Plaisir (FR)
(72) Inventeur: MOREE, Pascal,Thales Intellectual Property, F-94117 Arcueil Cedex (FR)
(74) Mandataire: Lucas, Laurent Jacques
(86) Numéro de dépôt international: FR0100712
(87) Numéro de publication internationale: WO01069560

(56) Documents cités:
- DE-A- 4 312 905
- DE-A- 19 705 518
- DE-U- 9 105 960

## Description

La présente invention se rapporte à une membrane élastomère anti-intrusion pour boîtiers électroniques sécurisés. Elle s'applique aux boîtiers sécurisés, tel que notamment les boîtiers codes confidentiels, dont on cherche à garantir l'intégrité physique par un moyen de détection d'ouverture.

Les boîtiers électroniques sécurisés sont utilisés dans de nombreuses applications et permettent notamment de lire des cartes à puce telles que par exemple des cartes bancaires, des porte-monnaie électroniques, des cartes multiservices (téléphonique, bancaire, porte-monnaie électronique, santé...) ou encore des cartes de paiement privatives. Afin d'éviter les fraudes, ils sont équipés de systèmes protections, tels que des dispositifs anti-intrusion, qui garantissent leur intégrité physique.

On peut citer l'exemple des terminaux de paiement électronique (TPE), notamment par carte bancaire. Ces terminaux électroniques sont la cible d'escrocs qui tentent par tous les moyens de les ouvrir et les modifier pour une utilisation frauduleuse. En réaction, les organismes de carte bancaire, telle que Visa International, imposent des normes de sécurité contraignantes pour homologuer ces terminaux de paiement. Selon l'une de ces normes, les terminaux doivent être en mesure de détecter toute tentative d'ouverture de leur boîtier. La détection de l'ouverture entraîne notamment la mise hors service du module de sécurité, lequel contient par exemple un ensemble d'algorithmes cryptographiques et de codes secrets servant à valider la carte à puce ou carte à piste magnétique et à assurer l'intégrité des informations de paiement (compteurs d'unités ou transactions).

Les terminaux de paiement électronique par carte bancaire comportent parfois des boîtiers codes confidentiels, encore appelés Pinpad dans la littérature anglo-saxonne. Ces boîtiers servent à lire une carte bancaire, entrer son code secret, et vérifier la validité du code entré. Ils comportent généralement un clavier numérique, un écran à cristaux liquides, un lecteur de carte à puce, éventuellement un cache code, et une connexion par fil à un terminal point de vente. Dans cet exemple, le terminal de paiement électronique est l'ensemble constitué du boîtier code confidentiel et du terminal point de vente.

Dans les techniques actuelles, les terminaux de paiement électronique sont équipés d'interrupteurs qui détectent l'ouverture. Ces interrupteurs sont placés en général sous le capot du boîtier, connectés à un circuit imprimé contenant le module de sécurité. L'ouverture du capot provoque l'ouverture des interrupteurs, ce qui invalide ou détruit le module de sécurité. Ces interrupteurs sont plus ou moins nombreux suivant la fiabilité requise, un grand nombre correspondant à une meilleure fiabilité.

Un inconvénient de ces techniques est le coût : ces interrupteurs sont des composants onéreux, et leur nombre va croissant à cause de normes de sécurité de plus en plus sévères.

Un autre inconvénient est le manque de fiabilité de ces interrupteurs, en particulier les fausses détections. Elles arrivent souvent en cas de choc, notamment lorsque le boîtier tombe. Le boîtier se déforme et s'écarte localement, au niveau d'un ou plusieurs interrupteurs, pendant une fraction de seconde. Ceci est particulièrement pénalisant pour son propriétaire qui ne peut alors plus l'utiliser. Afin de limiter ces fausses détections, les interrupteurs peuvent être équipés de ressorts destinés à absorber les chocs et les vibrations, mais ceci augmente encore le coût du boîtier code confidentiel. Une autre solution consiste à filtrer les détections de durée inférieures à quelques fractions de secondes par un filtre électronique, mais ceci diminue la sensibilité et par conséquent la fiabilité du système anti-intrusion.

Une autre solution, enseignée dans les documents. DE-A-4312905 et DE-U-9105960, consiste à envelopper les composants électroniques que l'on cherche à protéger par un film recouvert de pistes conductrices, ces pistes conductrices étant parallèles entre elles et formant des méandres, toute intrusion étant détectée par la rupture d'une de ces pistes.

Un but de l'invention est de pallier les inconvénients précités, et notamment de réduire les coûts de production des terminaux de paiement électronique.

A cet effet, l'invention concerne un dispositif anti-intrusion pour boîtier électronique sécurisé (20) qui détecte toute tentative d'ouverture du boîtier. Le dispositif comporte une membrane élastomère (50) dans laquelle est moulé au moins un bouton (51) ; le bouton étant sous pression lorsque le boîtier est fermé pour agir sur un circuit électronique (60), le bouton étant au repos lorsque le boîtier est ouvert.

L'invention a pour principaux avantages qu'elle est plus fiable que les dispositifs anti-intrusions déjà connus, qu'elle est facile à monter, et qu'elle permet de placer un grand nombre de boutons, et avantageusement de façon aléatoire sans surcoût important comparé aux systèmes connus.

D'autres caractéristiques et avantages de l'invention apparaîtront plus clairement dans la description qui va suivre et dans les figures annexées qui représentent :
- la figure 1a, un exemple d'utilisation de l'invention dans un terminal de paiement électronique autonome ;
- la figure 1b, un exemple d'utilisation de l'invention dans un boîtier code confidentiel relié à une caisse enregistreuse ;
- la figure 1c, un exemple d'utilisation de l'invention dans lecteur sécurisé servant de périphérique à un ordinateur ;
- la figure 1d, un exemple d'utilisation de l'invention dans un distributeur de billets ;
- la figure 1e, un exemple d'utilisation de l'invention dans un lecteur de porte-monnaie électronique ;
- la figure 1f, un exemple d'utilisation de l'invention dans un terminal de communication ;
- la figure 2, un boîtier code confidentiel ;
- les figures 3a et 3b, le capot et le socle du boîtier code confidentiel représenté sur la figure 2 ;
- les figures 4a et 4b, un exemple de dispositif anti-intrusion selon l'art antérieur ;
- la figure 5a, un exemple de membrane élastomère anti-intrusion selon l'invention ;
- la figure 5b, une vue en coupe de la membrane représentée sur la figure 5a ;
- les figures 6a et 6b, un exemple de dispositif anti-intrusion. selon l'invention.

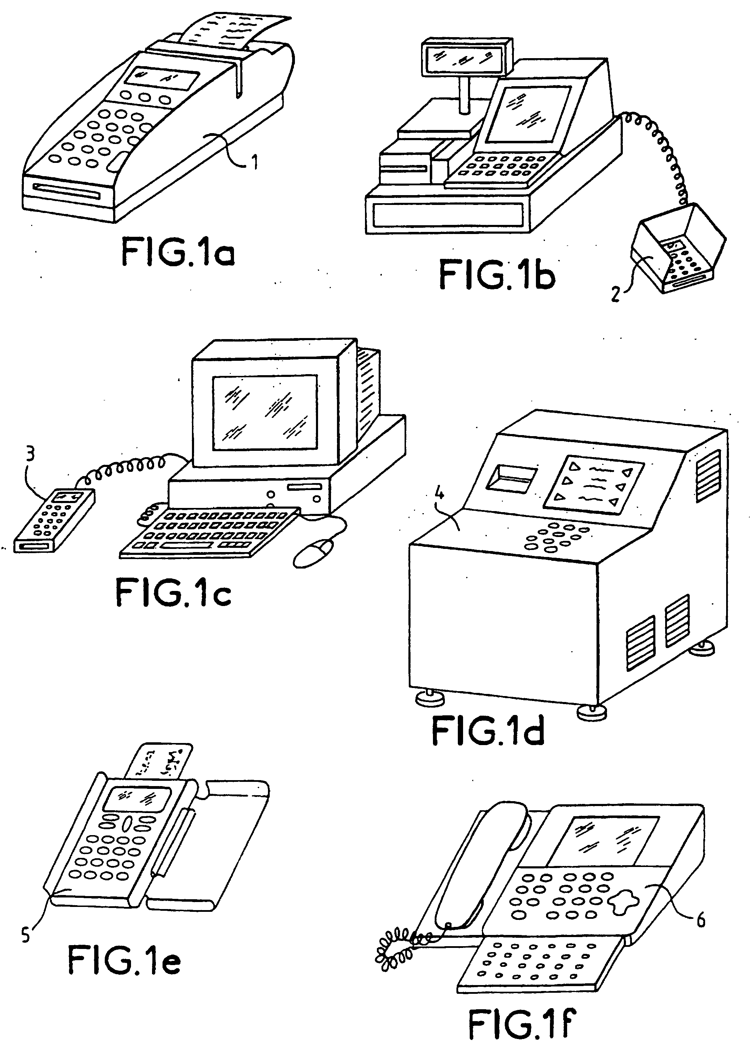

On se réfère tout d'abord aux figures 1a, 1b, 1c, 1d, 1e, et 1f qui représentent des exemples d'applications possibles de l'invention.

La figure 1a représente un terminal de paiement électronique 1, qui sert à effectuer des paiements par carte bancaire notamment chez les commerçants. On appelle encore ce type de terminaux des terminaux point de vente (TPV) en raison de leur usage. Ce terminal fonctionne de façon autonome ; il n'est pas relié à une caisse enregistreuse. Il comporte notamment : un clavier, servant au commerçant pour saisir le montant de la transaction, et au client pour saisir son code secret ; un afficheur, pour transmettre des messages au commerçant ou au client ; une imprimante thermique pour l'édition des tickets ; un lecteur de carte à puce ; une liaison radio avec un modem ; une mémoire contenant par exemple un historique des opérations, les transactions enregistrées et une liste noire. Cet appareil doit être sécurisé pour éviter les risques de fraude, en particulier ceux liés à la lecture de données secrètes contenues dans ce terminal. Il contient donc un dispositif physique de sécurité qui permet de détecter toute tentative d'ouverture du boîtier.

La figure 1b représente un boîtier code confidentiel 2, relié à une caisse enregistreuse. Ce boîtier sert à saisir le code secret d'une carte bancaire, et à vérifier la validité du code entré. Il comporte généralement une liaison par fil vers la caisse enregistreuse, un cache code qui masque la vue du clavier des regards indiscrets, un afficheur, un clavier, et un lecteur de carte à puce. Ce boîtier code confidentiel est utilisé par le client uniquement, et n'imprime pas de ticket. La saisie du montant de la transaction et l'impression du ticket s'effectuent sur la caisse enregistreuse. Un risque de fraude est l'interception du code secret de la carte bancaire. Les fraudeurs modifient le boîtier code confidentiel pour ajouter un dispositif de lecture sous le clavier, qui transmet la séquence de touches appuyées par le client, c'est à dire le code secret. Afin de contrer ce type de fraude, les boîtiers code confidentiel sont sécurisés, et sont en mesure de détecter toute tentative d'ouverture.

La figure 1c représente un lecteur sécurisé servant de périphérique à un ordinateur. Ce lecteur permet de lire des cartes à puce ce qui peut servir par exemple à effectuer des paiements électroniques sécurisés par carte bancaire sur Internet, à identifier le porteur d'une carte à puce pour autoriser l'accès à des données contenues dans l'ordinateur, ou encore à lire ou écrire des données sur une carte à puce privative. Dans l'application de paiement sécurisé sur Internet, ce lecteur a au moins deux avantages : la sécurité et la confidentialité. La sécurité et la confidentialité résultent du fait qu'aucune donnée concernant la carte bancaire, tel que le code secret, la date d'expiration, le nom du propriétaire de la carte, ne circule en clair sur le réseau. La fraude est possible à partir du moment ou ce lecteur est modifié, c'est pourquoi il doit être sécurisé et notamment être capable de détecter toute tentative d'ouverture du boîtier.

La figure 1d représente un distributeur automatique de billets 4. Nous ne rappelons pas ici le principe de fonctionnement ni ses éléments constitutifs. Il doit être évidemment protégé contre toute tentative d'ouverture du capot, pour notamment invalider le module de sécurité.

La figure 1e représente un lecteur sécurisé de carte à puce 5, pouvant être par exemple un lecteur de porte-monnaie électronique. Cet appareil comporte une protection physique, qui permet notamment de détecter toute tentative d'ouverture du boîtier afin d'éviter par exemple la production de fausse monnaie électronique.

La figure 1f représente un terminal de communication sécurisé 6. Ce terminal peut être par exemple un téléphone offrant des services de vidéo en temps réel ainsi qu'un accès à Internet, comportant avantageusement un lecteur de carte à puce permettant d'accéder à un portail sécurisé. Ce terminal contient des données confidentielles, telles que par exemple des clefs de cryptage ou des données privées stockées en mémoire. II est équipé d'un système qui permet de détecter toute tentative d'ouverture du boîtier, et qui entraîne la destruction des données confidentielles.

Une caractéristique commune des appareils décrits ci-dessus, est qu'ils doivent être en mesure de détecter toute tentative d'ouverture de leur boîtier ou d'un capot pour assurer l'intégrité ou la confidentialité de leur contenu.

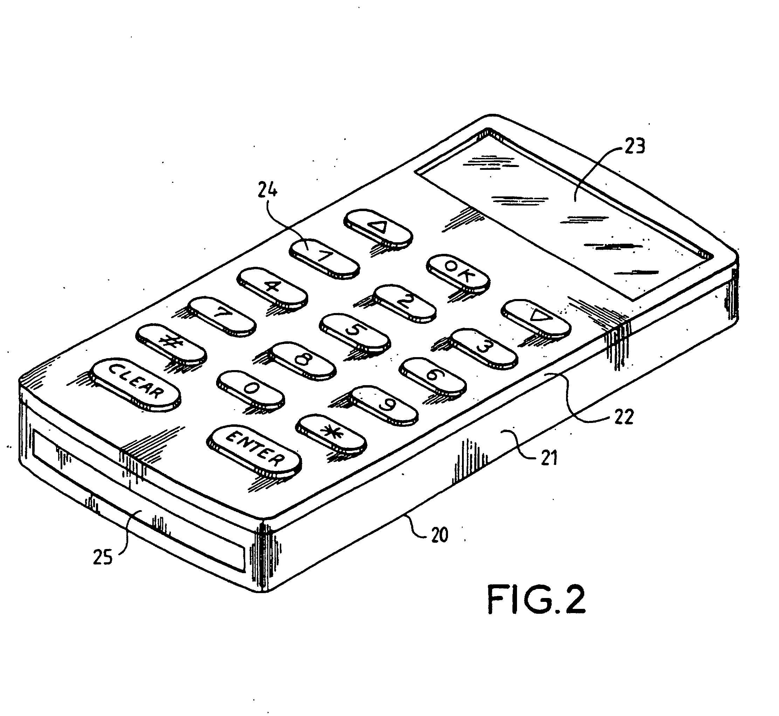

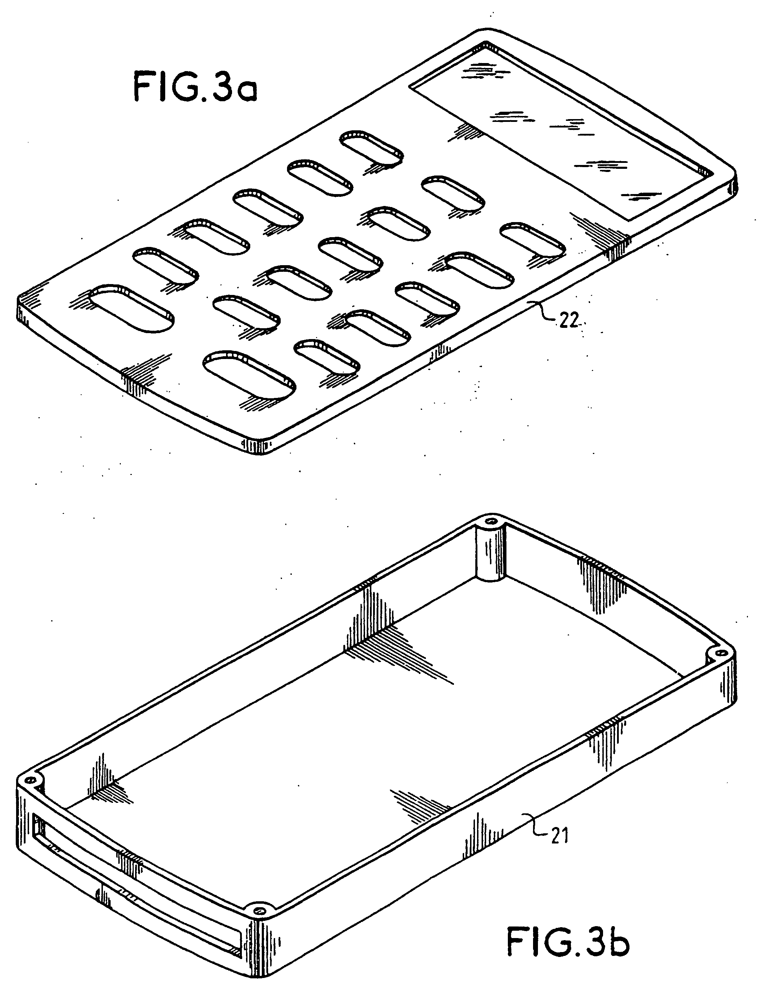

Dans la description qui va suivre, nous illustrerons un exemple de l'art antérieur et une application de l'invention dans un boîtier code confidentiel. On se réfère à la figure 2 sur laquelle est représenté un boîtier code confidentiel 20, comprenant notamment un corps de boîtier 21, un capot de boîtier 22, un afficheur 23, un clavier 24, un lecteur de carte à puce 25. La figure 3a représente le capot du boîtier seul, et la figure 3b représente le corps du boîtier 21.

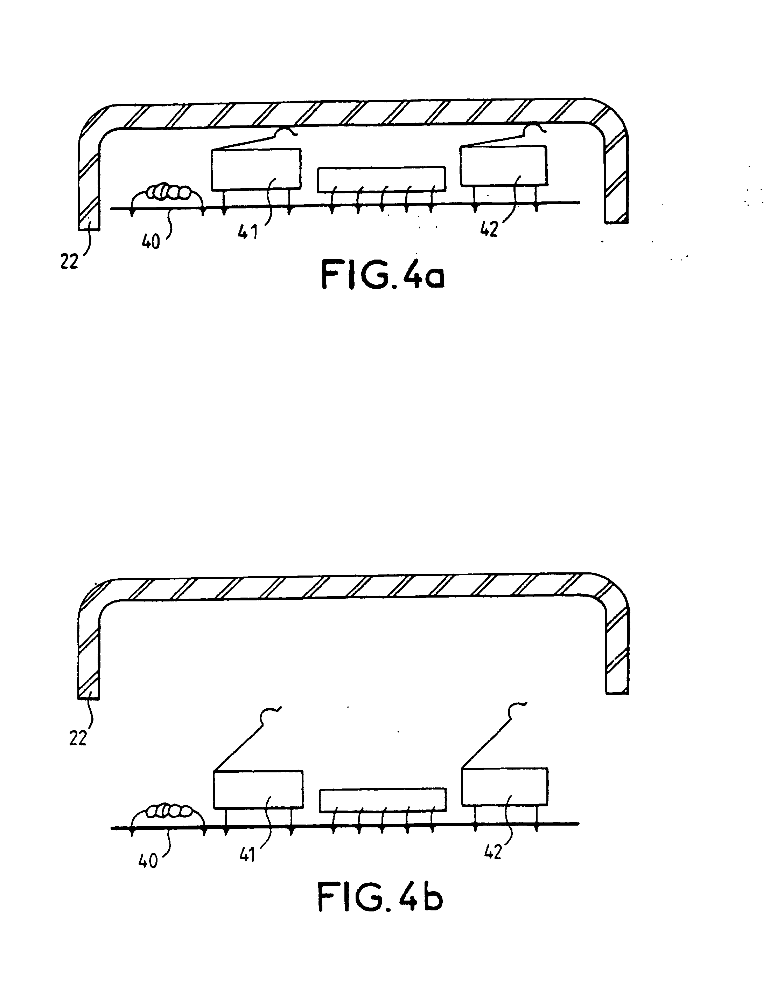

On se réfère maintenant aux figures 4a et 4b pour décrire un exemple de réalisation de dispositif anti-intrusion selon les techniques connues. Ces figures représentent une vue en coupe d'un circuit électronique 40, et d'un capot de boîtier 22. Le capot 22 appartient au boîtier 20 représenté sur la figure 2. Deux interrupteurs électroniques 41 et 42 sont placés sur le circuit électronique 40. Lorsque le boîtier 20 est fermé comme représenté sur la figure 4a, son capot 22 repose sur les interrupteurs 41 et 42, ce qui a pour effet de les fermer. Si quelqu'un tente d'ouvrir le boîtier, le capot 22 ne repose plus sur les interrupteurs, ce qui les ouvre comme représenté sur la figure 4b. Toute tentative d'intrusion est ainsi détectée par le circuit relié à chaque interrupteur, ce qui a pour effet d'invalider le module de sécurité.

Un inconvénient de cette technique est son coût : les interrupteurs sont des composants onéreux et complexes à monter, et leur nombre va croissant à cause de normes de sécurité de plus en plus sévères.

Un autre inconvénient est le manque de fiabilité de ces interrupteurs, en particulier les fausses détections. Elles arrivent souvent en cas de choc, notamment lorsque le boîtier tombe. Le boîtier se déforme et s'écarte localement, au niveau d'un ou plusieurs interrupteurs, pendant une fraction de seconde. Ceci est particulièrement pénalisant pour son propriétaire qui ne peut alors plus l'utiliser. Afin de limiter ces fausses détections, les interrupteurs peuvent être équipés de ressorts destinés à absorber les chocs et les vibrations, mais ceci augmente encore le coût du boîtier code confidentiel. Une autre solution consiste à filtrer les détections de durées inférieures à quelques fractions de secondes par un filtre électronique, mais ceci diminue la sensibilité et par conséquent la fiabilité du système anti-intrusion.

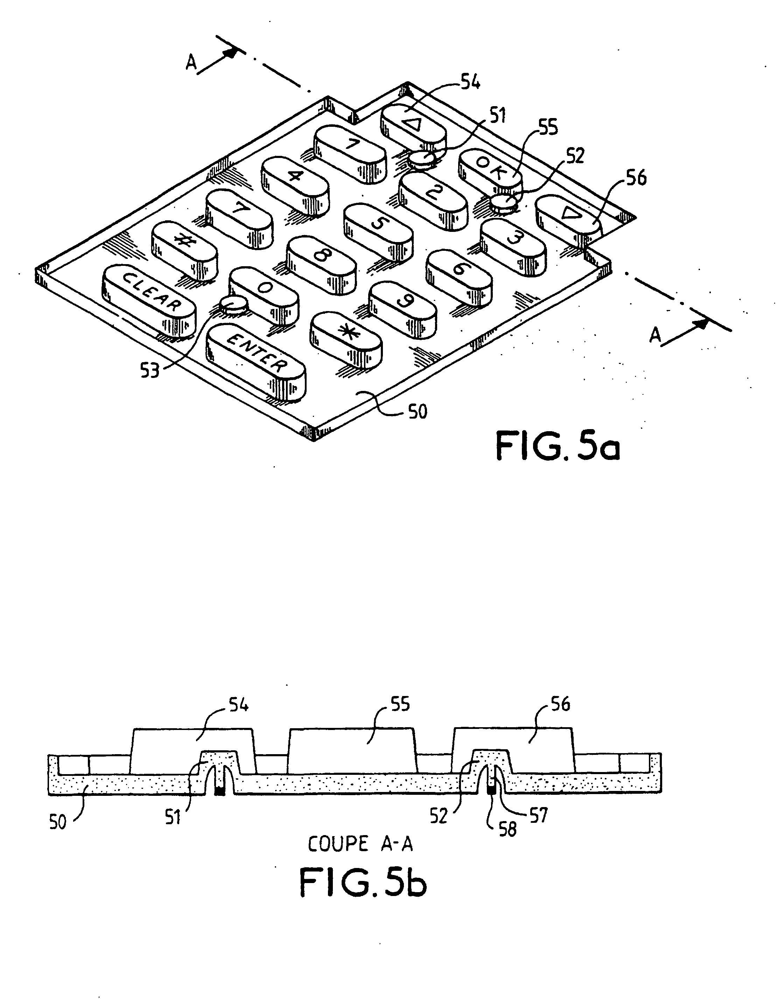

On se réfère maintenant aux figures 5a et 5b qui représentent un exemple de réalisation de membrane élastomère anti-intrusion selon l'invention. Cette membrane 50, en matière élastomère telle que le silicone, appartient au clavier 24 du boîtier code confidentiel 20 représenté sur la figure 2. Elle contient les boutons des touches du clavier 24, tels que par exemple les boutons 54, 55, 56. Elle contient aussi trois boutons 51, 52, 53, qui sont environ par exemple moins hauts que les boutons de touche de clavier. Les boutons moulés dans la membrane sont recouverts d'un substrat conducteur tel que représenté sur la vue en coupe figure 5b : par exemple le bouton 52 comprend un ergot 57 prolongé par une partie en carbone 58.

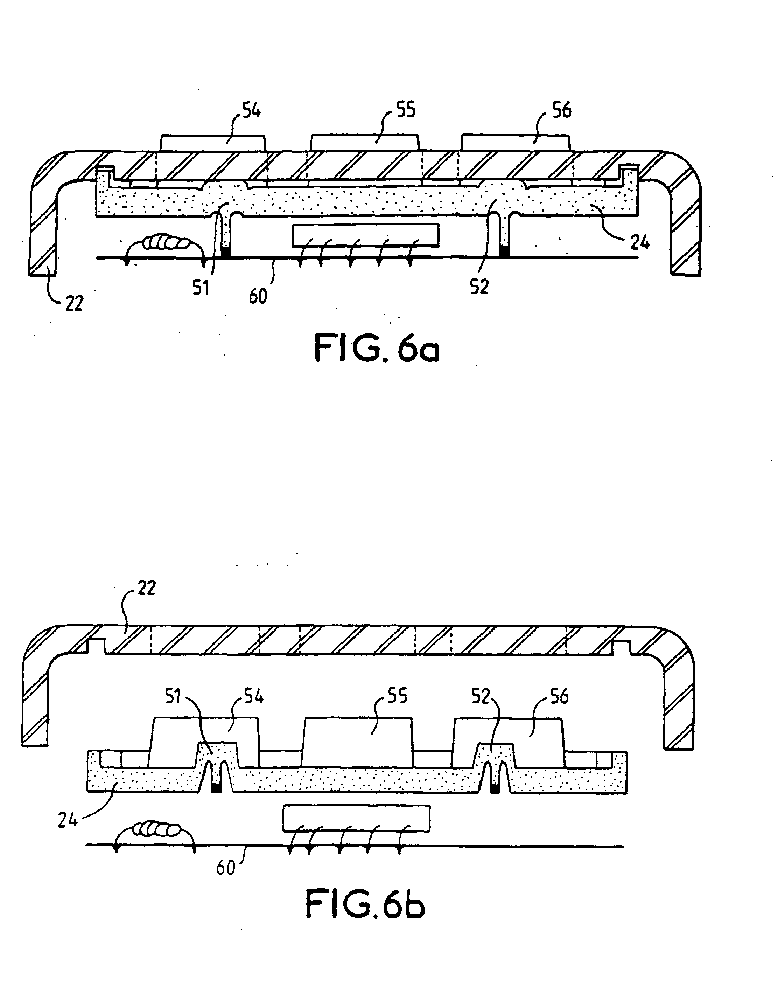

On se réfère aussi aux figures 6a et 6b qui représentent cette membrane vue en coupe avec d'autres éléments. La membrane est placée sous le capot 22 du boîtier 20 représenté sur les figures 2 et 3a. Un circuit électronique 60, permettant notamment de détecter les touches du clavier appuyées, est placé sous la membrane. Lorsque le boîtier est fermé comme représenté sur la figure 6a, le capot 22 repose sur les boutons 51, 52, 53. Ces boutons sont enfoncés sous la pression exercée par le capot 22 par rapport à leur position de repos. La partie conductrice des boutons est par conséquent en contact avec le circuit électronique 60. Ces points de contacts conducteurs permettent de relier entre elles des pistes conductrices du circuit 60. Ainsi, les boutons 51, 52 et 53 établissent des liaisons électriques dans le circuit 60 tant que le boîtier est fermé. Lorsque le boîtier est ouvert comme représenté sur la figure 5b, le capot 22 ne repose plus sur les boutons 51, 52, 53. Ces boutons se mettent alors dans leur position de repos et ne sont plus en contact avec le circuit électronique 60. Ils fonctionnent à la manière d'interrupteurs qui permettent de détecter toute tentative d'ouverture du boîtier.

Un avantage de l'invention par rapport à l'art antérieur est l'économie sur les composants. Lorsqu'on ajoute des boutons, on ne change pas le prix de la membrane car il suffit de modifier le moule de fabrication et d'ajouter le même substrat conducteur que sur les touches de claviers. Cela est à comparer par exemple aux interrupteurs dont l'ajout augmente le coût du dispositif anti-intrusion au moins du prix des interrupteurs. On économise grâce à l'invention le coût induit par l'ajout d'interrupteurs. On peut donc rendre le dispositif anti-intrusion plus fiable en ajoutant des boutons, sans pour autant augmenter son coût.

Un autre avantage de l'invention est la fiabilité du dispositif anti-intrusion. En effet, les propriétés d'élasticité de la membrane évitent les fausses détection induites notamment par des chocs. La membrane remplace ainsi avantageusement les filtres mécaniques ou électroniques qui pouvaient diminuer la sensibilité du dispositif anti-intrusion.

Un autre avantage de l'invention est sa facilité de montage. La membrane est simplement posée pour être mise en place. Elle ne requiert pas de soudure ou d'autre intervention mécanique pour la lier aux autres composants présents dans le boîtier. En conséquence, les temps de montage sont réduits par rapport aux techniques connues utilisant des interrupteurs, ce qui contribue à une réduction de coût additionnelle.

Selon une variante avantageuse, les boutons servant à détecter l'ouverture du boîtier peuvent être répartis aléatoirement sur la surface de la membrane. Ainsi, les fraudeurs ne pourront pas localiser l'emplacement des dispositifs anti-intrusion sur un boîtier pour déjouer le système de sécurité d'un autre boîtier de même modèle. Il suffit pour cela de prévoir plusieurs moules de fabrication de membrane avec des répartitions différentes de ces boutons. Les circuits électroniques seront eux aussi fabriqués avec des pistes conductrices dont les positions dépendent de celles des boutons. Par rapport aux dispositifs anti-intrusion à base d'interrupteurs électroniques, cette solution présente l'avantage d'être réalisable facilement sur une chaîne de montage, et donc à moindre coût.

Bien entendu, la présente invention ne se limite pas à la forme de réalisation décrite ci-avant à titre d'exemple. Elle s'étend à d'autres variantes.

On comprendra ainsi que la membrane a été décrite avec trois boutons servant à détecter l'ouverture du boîtier, mais que l'invention s'applique aussi à toute membrane comprenant un autre nombre de boutons. Ce nombre peut être plus ou moins important selon par exemple le niveau de sécurité requis ou encore la taille de la membrane élastomère.

En outre, la membrane sur laquelle sont placés les boutons n'est pas nécessairement une membrane de clavier. En particulier, cette membrane peut ne contenir que des boutons servant à détecter l'ouverture du boîtier et aucun autre type de bouton. Elle peut par exemple ne contenir qu'un seul bouton, ou encore un très grand nombre de boutons. Une telle variante de réalisation permet notamment de remplacer avantageusement un dispositif contenant un très grand nombre d'interrupteurs électroniques servant à détecter l'ouverture du boîtier.

Dans la description qui précède, le capot repose sur la membrane, mais le dispositif anti-intrusion selon l'invention fonctionne tout aussi bien si une autre pièce mécanique que le capot repose sur la membrane. La membrane peut par exemple être placée sous un autre composant contenu dans le boîtier, tel que par exemple un deuxième circuit électronique. Le premier circuit électronique placé sous la membrane contient les moyens de traitements sur lesquels agissent les boutons précités ; le second circuit électronique placé sur la membrane met en pression les boutons lorsque le boîtier est fermé.

L'invention s'applique bien entendu à tout type de boîtier électronique sécurisé. De manière générale, elle s'applique aux boîtiers sécurisés dont on cherche à garantir l'intégrité physique par un moyen de détection d'ouverture.

## Revendications

1. Dispositif anti-intrusion pour boîtier électronique sécurisé (20) qui détecte toute tentative d'ouverture du boîtier, le boîtier comprenant un circuit électronique (60), **caractérisé en ce que** ledit dispositif comporte une membrane élastomère (50) dans laquelle est moulé au moins un bouton (51) ; le bouton étant sous pression lorsque le boîtier est fermé pour agir sur ledit circuit électronique (60), le bouton étant au repos lorsque le boîtier est ouvert.

2. Dispositif anti-intrusion selon la revendication précédente, **caractérisé en ce que** l'action entre le bouton et le circuit électronique se fait par un contact électrique entre une partie conductrice appartenant au bouton et des pistes conductrices appartenant au circuit.

3. Dispositif anti-intrusion selon l'une des revendications précédentes, **caractérisé en ce que** la membrane comporte en outre des boutons de touche de clavier.

4. Dispositif anti-intrusion selon l'une des revendications précédentes, **caractérisé en ce que** la membrane élastomère est placée en contact avec au moins un élément mécanique agissant sur au moins un bouton de détection d'ouverture lorsque le boîtier est fermé, et n'agissant plus dessus lorsque le boîtier est ouvert.

5. Dispositif anti-intrusion selon l'une des revendications précédentes, **caractérisé en ce que** la membrane élastomère est placée entre un capot (22) et un circuit électronique (60).

6. Dispositif anti-intrusion selon l'une des revendications précédentes, **caractérisé en ce que** le boîtier électronique sécurisé est un bottier code confidentiel.

7. Dispositif anti-intrusion selon l'une des revendications 1 à 5, **caractérisé en ce que** le boîtier électronique sécurisé est un terminal de paiement électronique.

8. Dispositif anti-intrusion selon l'une des revendications 1 à 5, **caractérisé en ce que** le boîtier électronique sécurisé est lecteur de porte-monnaie électronique.

9. Dispositif anti-intrusion selon l'une des revendications 1 à 5, **caractérisé en ce que** le boîtier électronique sécurisé est un terminal de communication.

10. Dispositif anti-intrusion selon l'une des revendications 1 à 5, **caractérisé en ce que** le boîtier électronique sécurisé est un terminal de communication comportant un lecteur de carte à puce.

## Patentansprüche

1. Einbruchssicherungsvorrichtung für ein gesichertes Elektronikgehäuse (20), die jeden Öffnungsversuch des Gehäuses erkennt, wobei das Gehäuse einen elektronischen Schaltkreis (60) enthält, **dadurch gekennzeichnet, daß** die Vorrichtung eine Elastomer-Membran (50) umfaßt, in welcher mindestens ein Druckschalter (51) ausgeformt ist; wobei der Druckschalter gedrückt ist, wenn das Gehäuse geschlossen ist, um auf den elektronischen Schaltkreis (60) zu wirken, und der Druckschalter in Ruhestellung ist, wenn das Gehäuse geöffnet ist.

2. Einbruchssicherungsvorrichtung nach dem vorangegangenen Anspruch, **dadurch gekennzeichnet, daß** die Wirkung zwischen dem Druckschalter und dem elektronischen Schaltkreis über einen elektrischen Kontakt zwischen einem leitfähigen Teil des Druckknopfes und Leiterbahnen, die zum Schaltkreis gehören, entsteht.

3. Einbruchssicherungsvorrichtung nach einem der vorangegangenen Ansprüche, **dadurch gekennzeichnet, daß** die Membran außerdem Tastaturtasten aufweist.

4. Einbruchssicherungsvorrichtung nach einem der vorangegangenen Ansprüche, **dadurch gekennzeichnet, daß** die Elastomer-Membran mit mindestens einem mechanischen Element in Kontakt gebracht ist, welches auf mindestens einen Druckschalter zur Öffnungserkennung einwirkt, wenn das Gehäuse geschlossen ist, und welches nicht mehr darauf einwirkt, wenn das Gehäuse geöffnet ist.

5. Einbruchssicherungsvorrichtung nach einem der vorangegangenen Ansprüche, **dadurch gekennzeichnet, daß** die Elastomer-Membran zwischen einer Abdeckhaube (22) und einem elektronischen Schaltkreis (60) angeordnet ist.

6. Einbruchssicherungsvorrichtung nach einem der vorangegangenen Ansprüche, **dadurch gekennzeichnet, daß** das gesicherte Elektronikgehäuse ein Gehäuse für die Eingabe von Geheimnummern ist.

7. Einbruchssicherungsvorrichtung nach einem der Ansprüche 1 bis 5, **dadurch gekennzeichnet, daß** das gesicherte Elektronikgehäuse ein Endgerät für elektronische Bezahlung ist.

8. Einbruchssicherungsvorrichtung nach einem der Ansprüche 1 bis 5, **dadurch gekennzeichnet, daß** das gesicherte Elektronikgehäuse ein Geldkarten-Leser ist.

9. Einbruchssicherungsvorrichtung nach einem der Ansprüche 1 bis 5, **dadurch gekennzeichnet, daß** das gesicherte Elektronikgehäuse ein Kommunikationsendgerät ist.

10. Einbruchssicherungsvorrichtung nach einem der Ansprüche 1 bis 5, **dadurch gekennzeichnet, daß** das gesicherte Elektronikgehäuse ein Kommunikationsendgerät mit einem Chipkarten-Leser ist.

## Claims

1. Tamper-proof device for secure electronic housing (20) which detects any attempt to open the housing, the housing comprising an electronic circuit (60), **characterized in that** the said device comprises an elastomeric membrane (50) in which is moulded at least one button (51); the button being under pressure when the housing is closed so as to act on the said electronic circuit (60), the button being idle when the housing is open.

2. Tamper-proof device according to the previous claim, **characterized in that** the action between the button and the electronic circuit is effected by electrical contact between a conducting part belonging to the button and conducting tracks belonging to the circuit.

3. Tamper-proof device according to one of the preceding claims, **characterized in that** the membrane furthermore comprises keypad key buttons.

4. Tamper-proof device according to one of the preceding claims, **characterized in that** the elastomeric membrane is placed in contact with at least one mechanical element acting on at least one button for detecting opening when the housing is closed, and no longer acting on top when the housing is open.

5. Tamper-proof device according to one of the preceding claims, **characterized in that** the elastomeric membrane is placed between a lid (22) and an electronic circuit (60).

6. Tamper-proof device according to one of the preceding claims, **characterized in that** the secure electronic housing is a confidential code housing.

7. Tamper-proof device according to one of Claims 1 to 5, **characterized in that** the secure electronic housing is an electronic payment terminal.

8. Tamper-proof device according to one of Claims 1 to 5, **characterized in that** the secure electronic housing is an electronic purse reader.

9. Tamper-proof device according to one of Claims 1 to 5, **characterized in that** the secure electronic housing is a communication terminal.

10. Tamper-proof device according to one of Claims 1 to 5, **characterized in that** the secure electronic housing is a communication terminal comprising a chip card reader.
